# EUROPÄISCHE PATENTSCHRIFT

(11) **EP 4 574 353 B1**
(45) Veröffentlichungstag und Bekanntmachung des Hinweises auf die Patenterteilung: **08.07.2026**
(21) Anmeldenummer: 24183983.6
(22) Anmeldetag: 24.06.2024
(51) Int. Cl.: B25J 15/00, B27C 5/06, B25J 15/02

(54) **HANDHABUNGSVORRICHTUNG UND VERFAHREN ZUM HANDHABEN EINES HOLZWERKSTÜCKS**
HANDLING DEVICE AND METHOD FOR HANDLING A WOODEN WORKPIECE
DISPOSITIF DE MANIPULATION ET PROCÉDÉ DE MANIPULATION D'UNE PIÈCE EN BOIS

(30) Priorität: 22.12.2023 DE 102023136533
(43) Veröffentlichungstag der Anmeldung: 25.06.2025
(73) Patentinhaber: Gropyus AG, 1030 Wien (AT)
(72) Erfinder: Gasperlmair, Thomas, Steinhaus bei Wels (AT); Strassmair, Michael, Steinhaus bei Wels (AT); Hötzinger, Helmut, Steinhaus bei Wels (AT)
(74) Vertreter: Vossius & Partner Patentanwälte Rechtsanwälte mbB

(56) Entgegenhaltungen:
- WO-A1-2014/145510
- US-A1- 2023 356 429
- US-B1- 6 196 283

## Beschreibung

In vielen Fachgebieten werden mehrere Werkstücke, beispielsweise Holzwerkstücke, zusammengesetzt und miteinander befestigt, um ein gewünschtes Endprodukt und/oder Zwischenprodukt herzustellen. Beispielsweise im Hausbau, aber auch in vielen weiteren Fachgebieten, werden relativ viele Werkstücke, beispielsweise Holzwerkstücke, zusammengesetzt und miteinander befestigt.

In der Regel werden die einzelnen Werkstücke gegriffen, beispielsweise durch eine Greifvorrichtung, und entsprechend an die gewünschte Position und/oder in die gewünschte Orientierung gebracht. Anschließend werden die jeweiligen Werkstücke durch eine entsprechende Befestigungsvorrichtung an einer entsprechenden Struktur, beispielsweise an einem benachbarten Werkstück, befestigt.

Aus dem Stand der Technik sind derartige Greifvorrichtungen und Befestigungsvorrichtungen zwar bekannt, jedoch weisen die bekannten Vorrichtungen Nachteile auf. Beispielsweise sind die Vorgänge des Greifens, Positionierens und Befestigens des jeweiligen Werkstücks mittels der bekannten Vorrichtungen relativ langwierig und erfordern relativ viel Zeit und/oder Platz.

Ferner erfordern die aus dem Stand der Technik bekannten Vorrichtungen eine relativ hohe Genauigkeit und/oder relativ enge Toleranzen der Werkstücke, insbesondere im Hinblick auf deren Form und/oder Dimensionen, insbesondere bei Holzwerkstücken, insbesondere um ein Endprodukt bzw. Zwischenprodukt mit einer relativ hohen Produktqualität herzustellen. Demnach sind die aus dem Stand der Technik bekannten Vorrichtungen für Werkstücke mit schwankender Qualität und/oder mit variierenden Eigenschaften, beispielsweise bei ungewollten Verformungen, beispielsweise Biegungen und/oder Verwindungen, der Werkstücke, ungeeignet, oder zumindest weniger geeignet. Dies kann einen relativ hohen Materialausschuss und/oder eine relativ geringe Prozesssicherheit und/oder eine relativ schlechte Qualität des Endprodukts bzw. Zwischenprodukts bewirken. US 2023/356429 A1 offenbart eine Montagevorrichtung, die mindestens zwei Werkzeugsysteme umfasst, die jeweils Greifmittel, Positioniermittel und Sicherungsmittel aufweisen. Die Montagevorrichtung umfasst eine Werkzeugsteuerung, die mit den Werkzeugsystemen in Verbindung steht. Die Werkzeugsysteme werden so angesteuert, dass, wenn die Länge einer Holzlatte einen vorgegebenen Schwellenwert überschreitet, die Greifmittel die Holzlatte an verschiedenen Stellen greifen und relativ zueinander bewegt werden. WO 2014/145510 A1 und US 6 196 283 B1 offenbaren ebenfalls Vorrichtungen zum Verbinden von Bauteilen.

Es ist deshalb wünschenswert, zumindest einen Nachteil der aus dem Stand der Technik bekannten Vorrichtungen, vorzugsweise zumindest einen der oben genannten Nachteile, zumindest teilweise zu verbessern.

Es ist deshalb eine Aufgabe der vorliegenden Erfindung, das Handhaben bzw. Montieren eines Werkstücks, insbesondere eines Holzwerkstücks, zu verbessern.

Diese Aufgabe wird durch eine Handhabungsvorrichtung gemäß den Merkmalen des Anspruchs 1 gelöst. Vorteilhafte Ausgestaltungen mit zweckmäßigen Weiterbildungen der Erfindung sind in den jeweiligen Unteransprüchen sowie in der nachfolgenden Beschreibung angegeben.

Die Handhabungsvorrichtung ist zum Handhaben mindestens eines Holzwerkstücks eingerichtet. Zusätzlich kann die Handhabungsvorrichtung jedoch zum Handhaben mindestens eines Werkstücks im Allgemeinen, d.h. mindestens eines Werkstücks aus einem beliebigen Material, beispielsweise aus Metall und/oder Kunststoff, eingerichtet sein.

Die Handhabungsvorrichtung weist mindestens eine Greifvorrichtung zum Greifen des Holzwerkstücks auf. Die Handhabungsvorrichtung weist mindestens eine Befestigungsvorrichtung auf. Die Befestigungsvorrichtung ist dazu eingerichtet, das Holzwerkstück zumindest teilweise an einer Struktur zu befestigen. Die Handhabungsvorrichtung ist dazu eingerichtet, das Holzwerkstück zumindest teilweise gleichzeitig mittels der Greifvorrichtung zu greifen und mittels der Befestigungsvorrichtung an der Struktur zu befestigen.

Die hierin beschriebene Handhabungsvorrichtung kann somit zumindest die Schritte des Greifens und des Befestigens, und optional des Bewegens, des Holzwerkstücks mit einer einzigen Handhabungsvorrichtung kombinieren. Somit stellt die hierin beschriebene Handhabungsvorrichtung ein bisher unbekanntes Multifunktionswerkzeug dar, das mehrere Arbeitsschritte, umfassend zumindest Greifen und Befestigen des Holzwerkstücks, gleichzeitig durchführen kann. Dadurch können mehrere Prozessschritte mit einer einzigen Handhabungsvorrichtung durchgeführt werden, wohingegen im Stand der Technik eine Vorrichtung zum Greifen des Holzwerkstücks und eine separate Vorrichtung zum Befestigen des Holzwerkstücks eingesetzt werden.

Dadurch kann mit der hierin beschriebenen Handhabungsvorrichtung die Verarbeitungs- bzw. Montagedauer der Holzwerkstücke reduziert und somit die Effizienz der Verarbeitung bzw. Montage der Holzwerkstücke erhöht werden.

Außerdem können dadurch die Greifvorrichtung und die Befestigungsvorrichtung kompakter gestaltet und/oder angeordnet werden, wodurch der erforderliche Platz für die Greifvorrichtung und die Befestigungsvorrichtung reduziert werden kann.

Zusätzlich kann durch das teilweise gleichzeitige Greifen mittels der Greifvorrichtung und Befestigen mittels der Befestigungsvorrichtung das Holzwerkstück durch die Greifvorrichtung fixiert und/oder die Position und/oder Orientierung zumindest eines Abschnitts des Holzwerkstücks angepasst werden, beispielsweise durch Bewegen der Greifvorrichtung, und zwar vor, während und/oder nach dem Befestigen des Holzwerkstücks mittels der Befestigungsvorrichtung. Dadurch können beispielsweise verformte Holzwerkstücke, beispielsweise in Längsrichtung gebogene Holzwerkstücke, gerichtet werden, wohingegen die bekannten Vorrichtungen aus dem Stand der Technik derartige verformte Holzwerkstücke in der Regel nicht, oder nur mit Einschränkungen, beispielsweise mit reduzierter Qualität des End- bzw. Zwischenprodukts, verarbeiten können. Außerdem kann dadurch ein Verformen des Holzwerkstücks, beispielsweise beim Befestigen des Holzwerkstücks, verhindert oder zumindest reduziert werden. Dadurch kann der Materialausschuss reduziert werden und eine relativ hohe Produktqualität mit einer relativ großen Bandbreite an Qualität und/oder Formabweichungen der Holzwerkstücke, insbesondere mit schwankender Qualität der Holzwerkstücke, erreicht werden. Dies kann insbesondere bei Holzwerkstücken vorteilhaft sein, da Holz durch Temperaturänderungen und/oder Feuchtigkeitsänderungen zu Verformungen, insbesondere zum Verziehen und/oder Verwinden, neigen kann und seine Ausgangsform deshalb ändern kann.

Insgesamt kann mit der hierin beschriebenen Handhabungsvorrichtung die Prozesssicherheit und/oder die Prozessgenauigkeit beim Handhaben des Holzwerkstücks bzw. der Holzwerkstücke erhöht bzw. auf einem relativ hohen Niveau konsistenter gestaltet werden im Vergleich zu den aus dem Stand der Technik bekannten Vorrichtungen.

Die Greifvorrichtung kann dazu eingerichtet sein, das Holzwerkstück an mindestens zwei Greifabschnitten des Holzwerkstücks, die entlang des Holzwerkstücks, vorzugsweise entlang der Längsachse des Holzwerkstücks, voneinander beabstandet sind, zu greifen bzw. zu klemmen. Die Greifabschnitte des Holzwerkstücks können um mindestens 20 % der Gesamtlänge des Holzwerkstücks, vorzugsweise mindestens 25 % der Gesamtlänge des Holzwerkstücks, vorzugsweise mindestens 30 % der Gesamtlänge des Holzwerkstücks, vorzugsweise mindestens 35 % der Gesamtlänge des Holzwerkstücks, vorzugsweise mindestens 40 % der Gesamtlänge des Holzwerkstücks, vorzugsweise mindestens 45 % der Gesamtlänge des Holzwerkstücks, vorzugsweise mindestens 50 % der Gesamtlänge des Holzwerkstücks, voneinander beabstandet sein. Die Greifabschnitte des Holzwerkstücks sind vorzugsweise um mindestens 10 cm, vorzugsweise mindestens 20 cm, vorzugsweise mindestens 30 cm, vorzugsweise mindestens 40 cm, vorzugsweise mindestens 50 cm, vorzugsweise mindestens 60 cm, vorzugsweise mindestens 70 cm, vorzugsweise mindestens 80 cm, voneinander beabstandet. Dies kann das Richten von Verformungen der Holzwerkstücke, beispielsweise von in Längsrichtung gebogenen Holzwerkstücken, bzw. das Verhindern oder Reduzieren von Verformungen der Holzwerkstücke verbessern bzw. erleichtern. Dadurch kann das Holzwerkstück beispielsweise gegen Verziehen und/oder Verwinden, beispielsweise bei Temperaturänderungen und/oder Feuchtigkeitsänderungen, fixiert bzw. ausgerichtet werden.

Die Handhabungsvorrichtung kann als Endeffektor ausgebildet sein. Zusätzlich oder alternativ, kann die Handhabungsvorrichtung als verfahrbarer Roboter eingerichtet sein und/oder an einem verfahrbaren Roboter angebracht bzw. anbringbar sein.

Die Greifvorrichtung kann dazu eingerichtet sein, zumindest eine Klemmkraft, vorzugsweise zwischen mindestens zwei Elementen der Greifvorrichtung, auf zumindest einen Abschnitt des Holzwerkstücks auszuüben, um das Holzwerkstück zu greifen.

Die Greifvorrichtung kann verfahrbar sein, beispielsweise um die Greifvorrichtung und somit das Holzwerkstück zu bewegen, vorzugsweise translatorisch und/oder rotatorisch. Dadurch kann eine Position und/oder eine Orientierung zumindest eines Abschnitts des Holzwerkstücks, vorzugsweise des gesamten Holzwerkstücks, mithilfe der Greifvorrichtung verändert werden, und zwar vor, während und/oder nach dem Befestigen des Holzwerkstücks mittels der Befestigungsvorrichtung.

Die Handhabungsvorrichtung ist dazu eingerichtet, einen ersten Abschnitt des Holzwerkstücks mittels der Befestigungsvorrichtung mit der Struktur zu befestigen, die Befestigungsvorrichtung anschließend entlang des Holzwerkstücks, vorzugsweise in einem Zustand, in dem das Holzwerkstück durch die Greifvorrichtung gegriffen wird, durch Gleiten und/oder Rollen der Greifvorrichtung an dem Holzwerkstück zu einem zweiten
Abschnitt des Holzwerkstücks zu bewegen, vorzugsweise in geführter Weise, und den zweiten Abschnitt des Holzwerkstücks mittels der Befestigungsvorrichtung mit der Struktur zu befestigen. Dies kann das Richten von Holzwerkstücken mit Formabweichungen, beispielsweise von in Längsrichtung gebogenen Holzwerkstücken, bzw. das Verhindern oder Reduzieren von Verformungen der Holzwerkstücke verbessern bzw. erleichtern. Dadurch kann das Holzwerkstück beispielsweise gegen Verziehen und/oder Verwinden, beispielsweise bei Temperaturänderungen und/oder Feuchtigkeitsänderungen, fixiert bzw. ausgerichtet werden.

Die Greifvorrichtung kann mindestens zwei Greifrollen aufweisen, zwischen denen das Holzwerkstück klemmbar ist. Dies kann ein gleichzeitiges Greifen des Holzwerkstücks durch die Greifvorrichtung und Bewegen der Greifvorrichtung entlang des Holzwerkstücks, insbesondere durch ein Abrollen der Greifrollen an einer Oberfläche des Holzwerkstücks, erleichtern. Dies kann das Richten von Holzwerkstücken mit Formabweichungen, beispielsweise von in Längsrichtung gebogenen Holzwerkstücken, verbessern bzw. erleichtern. Die Drehachsen der Gleitrollen sind vorzugsweise im Wesentlichen senkrecht zur Längsachse des Holzwerkstücks orientiert.

Die Greifrollen können beweglich bzw. verfahrbar sein, so dass die Greifrollen zueinander und voneinander bewegbar sind, um die Greifrollen zwischen einer Klemmposition, in der das Holzwerkstück zwischen den Greifrollen geklemmt ist, und einer Offenposition, in dem ein Abstand zwischen den Greifrollen vergrößert wird im Vergleich zur Klemmposition, vorzugsweise so dass das Holzwerkstück berührungsfrei zwischen den Greifrollen angeordnet werden kann. Beispielsweise können die Greifrollen durch einen elektrischen und/oder hydraulischen und/oder pneumatischen Antrieb angetrieben werden, um die Greifrollen zu bewegen bzw. zu verfahren.

Die Greifrollen können dazu eingerichtet sein, eine Bewegung des Holzwerkstücks relativ zur Befestigungsvorrichtung, vorzugsweise entlang einer Längsachse des Holzwerkstücks, durch Drehen der Greifrollen zuzulassen und/oder zu bewirken, in einem Zustand, in dem das Holzwerkstück zwischen den Greifrollen geklemmt ist. Dadurch kann das Holzwerkstück an mehreren Positionen an der Struktur, mittels der Befestigungsvorrichtung, befestigt werden, indem das Holzwerkstück nach einer ersten Befestigung an einem ersten Bereich des Holzwerkstücks relativ zur Befestigungsvorrichtung bewegt wird und das Holzwerkstück an zumindest einem zweiten Bereich des Holzwerkstücks an der Struktur befestigt wird, während das Holzwerkstück zwischen den Greifrollen geklemmt ist, vorzugsweise durchgehend. Durch die gleichzeitige Klemmung des Holzwerkstücks, insbesondere beim Bewegen des Holzwerkstücks relativ zur Befestigungsvorrichtung, zwischen den Greifrollen kann eine Position und/oder eine Orientierung des Holzwerkstücks relativ zur Befestigungsvorrichtung verändert bzw. angepasst und/oder fixiert werden, um Verformungen des Holzwerkstücks zu richten und/oder zu verhindern, oder zumindest zu reduzieren. Die Bewegung des Holzwerkstücks relativ zur Befestigungsvorrichtung kann durch Bewegen des Holzwerkstücks und/oder durch Bewegen der Handhabungsvorrichtung bewirkt werden.

Die Greifrollen können einen Antrieb aufweisen, beispielsweise ein Motor, um die Greifrollen drehend anzutreiben. Alternativ können die Rollen auch nur passiv drehbar sein, beispielsweise durch Wechselwirkung, beispielsweise Reibung, zwischen den Greifrollen und dem Holzwerkstück.

Die Greifvorrichtung kann ein erstes Paar von Greifrollen und mindestens ein zweites Paar von Greifrollen aufweisen, die jeweils dazu eingerichtet sind, das Holzwerkstück zwischen den Greifrollen des jeweiligen Paars zu klemmen. Das erste Paar von Greifrollen und das zweite Paar von Greifrollen können entlang einer Längsachse des Holzwerkstücks voneinander beabstandet angeordnet sein, wenn das Holzwerkstück zwischen den Greifrollen geklemmt ist. Dies kann das Richten und/oder Fixeren des Holzwerkstücks verbessern bzw. erleichtern.

Das erste Paar von Greifrollen und das zweite Paar von Greifrollen können um mindestens 20 % der Gesamtlänge des Holzwerkstücks, vorzugsweise mindestens 25 % der Gesamtlänge des Holzwerkstücks, vorzugsweise mindestens 30 % der Gesamtlänge des Holzwerkstücks, vorzugsweise mindestens 35 % der Gesamtlänge des Holzwerkstücks, vorzugsweise mindestens 40 % der Gesamtlänge des Holzwerkstücks, vorzugsweise mindestens 45 % der Gesamtlänge des Holzwerkstücks, vorzugsweise mindestens 50 % der Gesamtlänge des Holzwerkstücks, voneinander beabstandet sein. Das erste Paar von Greifrollen und das zweite Paar von Greifrollen können um mindestens 10 cm, vorzugsweise mindestens 20 cm, vorzugsweise mindestens 30 cm, vorzugsweise mindestens 40 cm, vorzugsweise mindestens 50 cm, vorzugsweise mindestens 60 cm, vorzugsweise mindestens 70 cm, vorzugsweise mindestens 80 cm, voneinander beabstandet sein.

Die Greifvorrichtung kann mindestens ein Arretierelement aufweisen, das dazu eingerichtet ist, mit dem Holzwerkstück in Kontakt zu treten, um das Holzwerkstück relativ zur Befestigungsvorrichtung zu fixieren. Dies kann ein Fixieren des Holzwerkstücks, beispielsweise in einer Position und/oder einer Orientierung, erleichtern.

Die Greifvorrichtung kann mindestens zwei Klemmbacken aufweisen, zwischen denen das Holzwerkstück klemmbar ist, um das Holzwerkstück relativ zur Befestigungsvorrichtung zu fixieren. Die Klemmbacken können eine Fixierung des Holzwerkstücks, insbesondere beim Befestigen des Holzwerkstücks an der Struktur, ermöglichen bzw. erleichtern. Die Klemmbacken können beweglich bzw. verfahrbar sein, so dass die Klemmbacken zueinander und voneinander bewegbar sind, um die Klemmbacken zwischen einer Klemmposition, in der das Holzwerkstück zwischen den Klemmbacken geklemmt und demnach im Wesentlichen unbeweglich ist, und einer Offenposition, in der das Holzwerkstück zwischen den Klemmbacken beweglich ist, vorzugsweise kontaktfrei. Beispielsweise können die Klemmbacken durch einen elektrischen und/oder hydraulischen und/oder pneumatischen Antrieb angetrieben werden, um die Klemmbacken zu bewegen bzw. zu verfahren.

Die Klemmbacken können in die Klemmposition gebracht werden, wobei die Befestigungsvorrichtung anschließend zumindest einen Abschnitt des Holzwerkstücks an der Struktur befestigen kann, beispielsweise mittels mindestens einer Klammer und/oder mindestens eines Nagels. Anschließend können die Klemmbacken in die Offenposition gebracht werden. Anschließend kann das Holzwerkstück relativ zu den Klemmbacken und zur Befestigungsvorrichtung bewegt werden, beispielsweise mittels eines Antriebs und/oder Roboters, beispielsweise bis ein zweiter Abschnitt des Holzwerkstücks an der Befestigungsvorrichtung angeordnet ist, so dass die Befestigungsvorrichtung den zweiten Abschnitt des Holzwerkstücks an der Struktur befestigen kann. Anschließend können die Klemmbacken erneut in die Klemmposition gebracht werden, um das Holzwerkstück zwischen den Klemmbacken zu klemmen. Anschließend kann die Befestigungsvorrichtung den zweiten Abschnitt des Holzwerkstücks an der Struktur befestigen, beispielsweise mittels mindestens einer weiteren Klammer und/oder mindestens eines weiteren Nagels. Die Klemmbacken können dazu eingerichtet sein, mindestens eine Klemmkraft auf das Holzwerkstück auszuüben, die entlang derselben Richtung wirkt, wie die Klemmkraft der Greifrollen.

Die Klemmbacken sind vorzugsweise zwischen dem ersten Paar von Greifrollen und dem zweiten Paar von Greifrollen angeordnet, im Hinblick auf eine Richtung entlang der Längsachse des Holzwerkstücks, wenn das Holzwerkstück von den Greifrollen und/oder den Klemmbacken gegriffen wird.

Vorzugsweise sind die Klemmbacken dazu eingerichtet, ein Bewegen des Holzwerkstücks, insbesondere entlang der Längsachse des Holzwerkstücks, im Wesentlichen zu verhindern, wenn das Holzwerkstück zwischen den Klemmbacken geklemmt ist, wohingegen die Greifrollen dazu eingerichtet sind, ein Bewegen des Holzwerkstücks, insbesondere entlang der Längsachse des Holzwerkstücks, zuzulassen, wenn das Holzwerkstück zwischen den Greifrollen geklemmt ist.

Vorzugsweise ist die Greifvorrichtung dazu eingerichtet, das Holzwerkstück an mindestes zwei Greifpositionen, vorzugsweise mindestes drei Greifpositionen, vorzugsweise mindestens vier Greifpositionen, entlang der Längsachse des Holzwerkstücks zu greifen. Die Greifpositionen sind in einer Richtung entlang der Längsachse des Holzwerkstücks voneinander beabstandet.

Die Handhabungsvorrichtung kann zusätzlich mindestens ein Andrückelement aufweisen, das dazu eingerichtet ist, mit dem Holzwerkstück in Kontakt zu treten, und vorzugsweise auf das Holzwerkstück eine Kraft, vorzugsweise eine Druckkraft, auszuüben. Dadurch kann ein Abstand des Holzwerkstücks von der Befestigungseinrichtung vorgegeben bzw. definiert werden. Außerdem kann dadurch die Genauigkeit und/oder Qualität der Befestigung des Holwerkstücks an der Struktur erhöht werden. Vorzugsweise wirkt die Kraft, welche das Andrückelement auf das Holzwerkstück ausüben kann, in einer Richtung, die im Wesentlichen senkrecht zur Greifkraft bzw. Klemmkraft erstreckt, welche die Greifvorrichtung bzw. die Greifrolle(n) und/oder die Klemmbacken auf das Holzwerkstück ausübt/ausüben. Vorzugsweise ist das Andrückelement dazu eingerichtet, das Holzwerkstück gegen die Struktur anzudrücken.

Das Andrückelement kann als Andrückrolle ausgebildet sein, die dazu eingerichtet ist, eine Bewegung des Holzwerkstücks relativ zur Befestigungsvorrichtung, vorzugsweise entlang einer Längsachse des Holzwerkstücks, durch Drehen der Andrückrolle zuzulassen und/oder zu bewirken, in einem Zustand, in dem die Andrückrolle an dem Holzwerkstück anliegt. Dadurch kann eine Position und/oder eine Orientierung des Holzwerkstücks relativ zur Befestigungsvorrichtung verändert werden, beispielsweise um das Holzwerkstück an mehreren Befestigungsabschnitten des Holzwerkstücks mit der Struktur zu befestigen. Die Bewegung des Holzwerkstücks relativ zur Befestigungsvorrichtung kann durch Bewegen des Holzwerkstücks und/oder durch Bewegen der Handhabungsvorrichtung bewirkt werden.

Die Drehachse der Andrückrolle kann sich im Wesentlichen senkrecht zur Längsachse des Holzwerkstücks und/oder im Wesentlichen senkrecht zur Drehachse der Gleitrolle(n) erstrecken.

Die Handhabungsvorrichtung kann zusätzlich mindestens einen Sensor aufweisen, der dazu eingerichtet ist, mindestens eine Position und/oder mindestens eine Orientierung des Holzwerkstücks, vorzugsweise relativ zur Befestigungsvorrichtung, zu erfassen. Dadurch kann eine Ist-Position und/oder eine Ist-Orientierung des Holzwerkstücks bestimmt werden, beispielsweise um darauf basierend das Holzwerkstück in eine Ziel-Position und/oder eine Ziel-Orientierung zu bringen, beispielsweise durch Bewegen der Greifvorrichtung, in einem Zustand, in dem das Holzwerkstück durch die Greifvorrichtung gegriffen wird.

Die Handhabungsvorrichtung kann zusätzlich mindestens einen Sensor aufweisen, der dazu eingerichtet ist, ein Greifen des Holzwerkstücks mittels der Greifvorrichtung festzustellen. Dadurch kann die Prozesssicherheit und Prozessgenauigkeit erhöht werden.

Die Handhabungsvorrichtung kann verfahrbar sein, vorzugsweise als eine zusammenhängende Einheit.

Die Befestigungsvorrichtung kann dazu eingerichtet sein, mindestens ein Befestigungselement, vorzugsweise mindestens eine Klammer und/oder einen Nagel, abzugeben und das Holzwerkstück mittels des Befestigungselements an der Struktur zu befestigen.

Das Holzwerkstück kann eine Querschnittsfläche von 100 mm² bis 40.000 mm², vorzugsweise von 500 mm² bis 40.000 mm², vorzugsweise von 500 mm² bis 35.000 mm², vorzugsweise von 500 mm² bis 30.000 mm², vorzugsweise von 500 mm² bis 25.000 mm², vorzugsweise von 500 mm² bis 20.000 mm², vorzugsweise von 500 mm² bis 15.000 mm², vorzugsweise von 1.000 mm² bis 15.000 mm², vorzugsweise von 1.000 mm² bis 12.500 mm², vorzugsweise von 1.250 mm² bis 12.500 mm², vorzugsweise von 1.250 mm² bis 10.000 mm², vorzugsweise von 1.500 mm² bis 10.000 mm², vorzugsweise von 1.750 mm² bis 10.000 mm², vorzugsweise von 2.000 mm² bis 10.000 mm², vorzugsweise von 2.250 mm² bis 10.000 mm², vorzugsweise von 2.500 mm² bis 10.000 mm², vorzugsweise von 2.500 mm² bis 7.500 mm², vorzugsweise von 2.500 mm² bis 5.000 mm², vorzugsweise von 2.750 mm² bis 5.000 mm², vorzugsweise von 2.750 mm² bis 4.000 mm², vorzugsweise von 3.000 mm² bis 4.000 mm², aufweisen. Mit anderen Worten: die hierin beschriebene Handhabungsvorrichtung kann dazu eingerichtet sein, mindestens ein Holzwerkstück zu handhaben, welches eine Querschnittsfläche mit den oben angegebenen Wertebereichen aufweist.

Das Holzwerkstück kann eine Länge von mindestens 250 mm, vorzugsweise mindestens 500 mm, vorzugsweise mindestens 750 mm, vorzugsweise mindestens 1.000 mm, vorzugsweise mindestens 1.250 mm, vorzugsweise mindestens 1.500 mm, vorzugsweise mindestens 1.750 mm, vorzugsweise mindestens 2.000 mm, vorzugsweise mindestens 2.500 mm, vorzugsweise mindestens 3.000 mm, vorzugsweise mindestens 3500 mm, vorzugsweise mindestens 4.000 mm, vorzugsweise mindestens 4.500 mm, vorzugsweise mindestens 5.000 mm, vorzugsweise mindestens 5.500 mm, vorzugsweise mindestens 6.000 mm, vorzugsweise mindestens 6.500 mm, aufweisen. Mit anderen Worten: die hierin beschriebene Handhabungsvorrichtung kann dazu eingerichtet sein, mindestens ein Holzwerkstück zu handhaben, welches eine Länge mit den oben angegebenen Wertebereichen aufweist.

Das Holzwerkstück kann ein Gewicht von mindestens 0,1 kg, vorzugsweise mindestens 1 kg, vorzugsweise mindestens 2,5 kg, vorzugsweise mindestens 5 kg, vorzugsweise mindestens 10 kg, vorzugsweise mindestens 15 kg, vorzugsweise mindestens 20 kg, vorzugsweise mindestens 25 kg, vorzugsweise mindestens 35 kg, vorzugsweise mindestens 45 kg, vorzugsweise mindestens 60 kg, vorzugsweise mindestens 75 kg, vorzugsweise mindestens 90 kg, vorzugsweise mindestens 100 kg, aufweisen. Mit anderen Worten: die hierin beschriebene Handhabungsvorrichtung kann dazu eingerichtet sein, mindestens ein Holzwerkstück zu handhaben, welches ein Gewicht mit den oben angegebenen Wertebereichen aufweist.

Die Struktur kann ein Wandelement sein, vorzugsweise ein Wandelement eines Gebäudes. Alternativ oder zusätzlich kann die Struktur ein weiteres, vorzugsweise benachbartes, Werkstück, insbesondere Holzwerkstück, sein.

Ferner ist hierin eine Greifvorrichtung beschrieben. Die Merkmale, Ausführungen und Vorteile, wie hierin zur Handhabungsvorrichtung beschrieben, gelten für die Greifvorrichtung entsprechend. Insbesondere kann die Greifvorrichtung die Merkmale, Ausführungen und Vorteile der Greifvorrichtung der hierin beschriebenen Handhabungsvorrichtung aufweisen.

Die Greifvorrichtung kann mindestens zwei Greifrollen, zwischen denen das Holzwerkstück klemmbar ist, aufweisen. Die Greifvorrichtung kann mindestens zwei Klemmbacken aufweisen, zwischen denen das Holzwerkstück klemmbar ist. Die Greifvorrichtung kann mindestens eine Andrückrolle aufweisen, die dazu eingerichtet ist, mit dem Holzwerkstück in Kontakt zu treten, und vorzugsweise das Holzwerkstück gegen die Struktur anzudrücken. Die Andrückrolle kann dazu eingerichtet sein, eine Bewegung des Holzwerkstücks relativ zur Befestigungsvorrichtung, vorzugsweise entlang einer Längsachse des Holzwerkstücks, durch Drehen der Andrückrolle zuzulassen und/oder zu bewirken, in einem Zustand, in dem die Andrückrolle an dem Holzwerkstück anliegt.

Die vorliegende Erfindung betrifft außerdem ein Verfahren zum Handhaben mindestens eines Holzwerkstücks, vorzugsweise mindestens eines Holzbalkens, vorzugsweise mittels einer Handhabungsvorrichtung nach einer der hierin beschriebenen Ausführungen. Die Merkmale, Ausführungen und Vorteile, wie hierin zur Handhabungsvorrichtung beschrieben, gelten für das Verfahren entsprechend.

Das Verfahren weist auf:
(a) Greifen des Holzwerkstücks mittels mindestens einer Greifvorrichtung.
   Das Verfahren weist auf:
(b) Einstellen, mittels der Greifvorrichtung, einer Position und/oder einer Orientierung des Holzwerkstücks, relativ zu einer Befestigungsvorrichtung.

Das Verfahren weist auf:
(c) Befestigen des Holzwerkstücks an einer Struktur mittels der Befestigungsvorrichtung, während die Greifvorrichtung gleichzeitig das Holzwerkstück greift.

Das Verfahren ist nicht auf die Reihenfolge, in welcher die Schritte hierin beschrieben sind, beschränkt. Stattdessen können die Schritte in beliebiger Reihenfolge durchgeführt werden. Die Befestigungsvorrichtung befestigt einen ersten Abschnitt des Holzwerkstücks an der Struktur, vorzugsweise mittels mindestens eines Befestigungselements, vorzugsweise mittels mindestens einer Klammer und/oder mindestens eines Nagels. Die Befestigungsvorrichtung wird anschließend entlang des Holzwerkstücks zu einem zweiten Abschnitt durch Gleiten und/oder Rollen der Greifvorrichtung an dem Holzwerkstück bewegt. Die Befestigungsvorrichtung befestigt den zweiten Abschnitt des Holzwerkstücks an der Struktur, vorzugsweise mittels mindestens eines Befestigungselements, vorzugsweise mittels mindestens einer Klammer.

Weitere Vorteile, Merkmale und Einzelheiten der Erfindung ergeben sich aus der nachfolgenden Beschreibung eines bevorzugten Ausführungsbeispiels sowie anhand der Zeichnungen.
- Fig. 1: zeigt, in einer perspektivischen und schematischen Ansicht, eine Handhabungsvorrichtung gemäß einer Ausführungsform der vorliegenden Erfindung;
- Fig. 2: zeigt, in einer schematischen Seitenansicht, die Handhabungsvorrichtung aus Fig. 1;
- Fig. 3: zeigt, in einer schematischen Vorderansicht, die Handhabungsvorrichtung aus Fig. 1 und 2;
- Fig. 4: zeigt, in einer vergrößerten und schematischen Vorderansicht, die Klemmbacken der Handhabungsvorrichtung aus Fig. 1 bis 3;
- Fig. 5: zeigt, in einer vergrößerten und schematischen Querschnittsansicht, die Greifrollen der Handhabungsvorrichtung aus Fig. 1 bis 3.

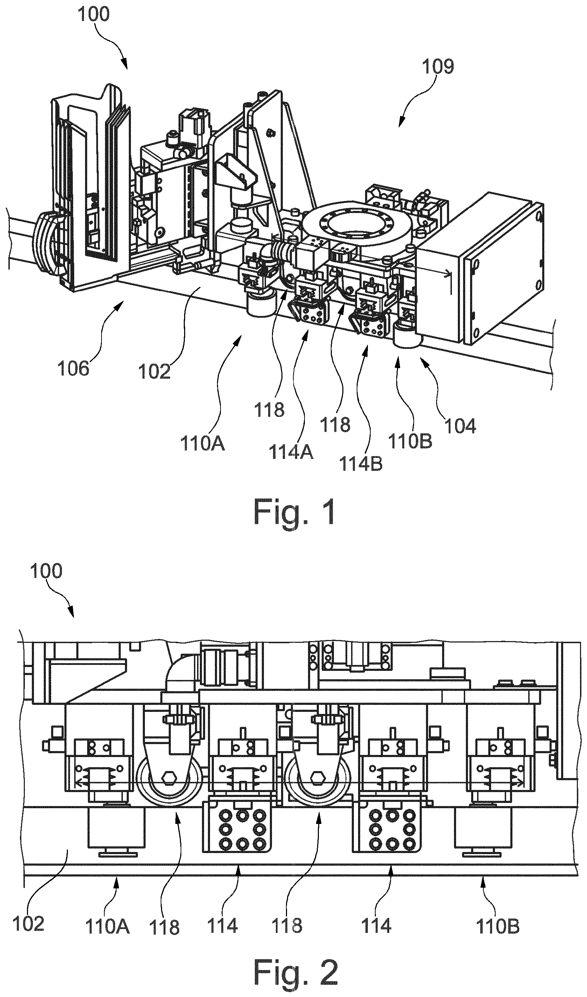

Fig. 1 bis 3 zeigen, in perspektivischen und schematischen Ansichten, eine Handhabungsvorrichtung 100 zum Handhaben mindestens eines Werkstücks 102, insbesondere eines Holzwerkstücks 102. In den Figuren ist das Werkstück 102 beispielhaft als Holzbalken ausgebildet. Jedoch kann die Handhabungsvorrichtung 100 zum Handhaben einer Vielzahl von verschiedenen Werkstücken, beispielshaft von Werkstücken aus beliebigen 16

Materialen und/oder mit beliebigen Formen und/oder mit beliebigen Dimensionen, eingesetzt werden.

Die Handhabungsvorrichtung 100 kann mindestens eine Greifvorrichtung 104 zum Greifen des Holzwerkstücks 102 aufweisen. Die Handhabungsvorrichtung 100 kann außerdem mindestens eine Befestigungsvorrichtung 106 aufweisen, die dazu eingerichtet ist, das Holzwerkstück 102 zumindest teilweise an einer (nicht dargestellten) Struktur zu befestigen, beispielsweise mittels mindestens einer Klammer und/oder mindestens eines Nagels.

Die Handhabungsvorrichtung 100 kann dazu eingerichtet sein, das Holzwerkstück 102 zumindest teilweise gleichzeitig mittels der Greifvorrichtung 104 zu greifen und mittels der Befestigungsvorrichtung 106 an der Struktur zu befestigen.

Die Handhabungsvorrichtung 100 kann dazu eingerichtet sein, das Holzwerkstück 102 an mehreren Abschnitten desselben, mittels der Befestigungsvorrichtung 106, mit der Struktur zu befestigen, in einem Zustand, in dem das Holzwerkstück 102 durch die Greifvorrichtung 104 gegriffen wird. Beispielsweise kann die Handhabungsvorrichtung 100 dazu eingerichtet sein, einen ersten Abschnitt des Holzwerkstücks 102 mittels der Befestigungsvorrichtung 106 mit der Struktur zu befestigen, die Befestigungsvorrichtung 106 anschließend entlang des Holzwerkstücks 102, vorzugsweise durch Gleiten und/oder Rollen der Greifvorrichtung 104 an dem Holzwerkstück 102, zu einem zweiten Abschnitt des Holzwerkstücks 102 zu bewegen und den zweiten Abschnitt des Holzwerkstücks 102 mittels der Befestigungsvorrichtung 106 mit der Struktur zu befestigen.

Hierzu kann die Greifvorrichtung 104 mindestens zwei Greifrollen 110 aufweisen, zwischen denen das Holzwerkstück 102 klemmbar ist. Die Greifrollen 110 können dazu eingerichtet sein, eine Bewegung des Holzwerkstücks 102 relativ zur Befestigungsvorrichtung 106, vorzugsweise entlang einer Längsachse des Holzwerkstücks 102, durch Drehen der Greifrollen 110 zuzulassen und/oder zu bewirken, in einem Zustand, in dem das Holzwerkstück 102 zwischen den Greifrollen 110 geklemmt ist.

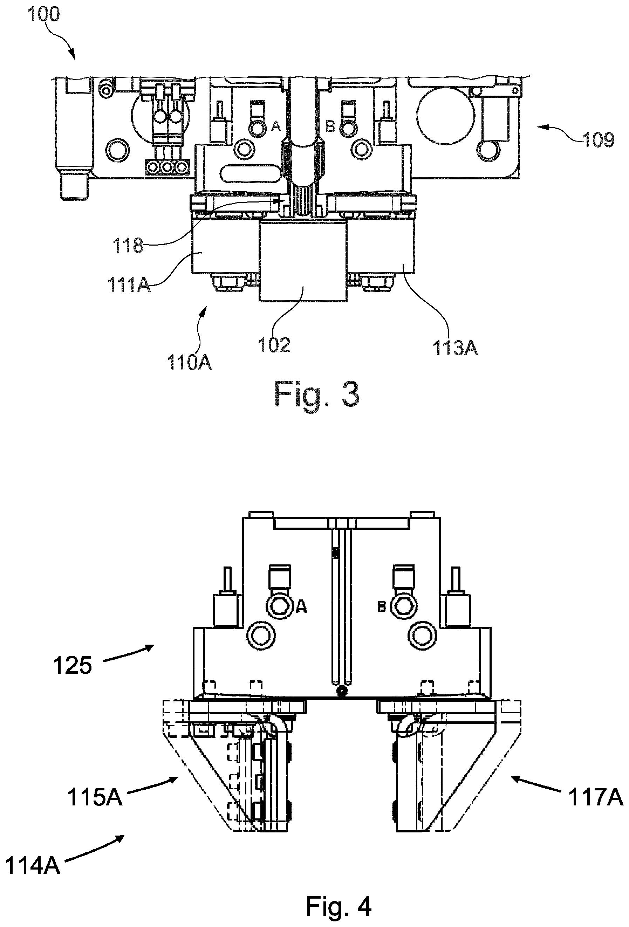

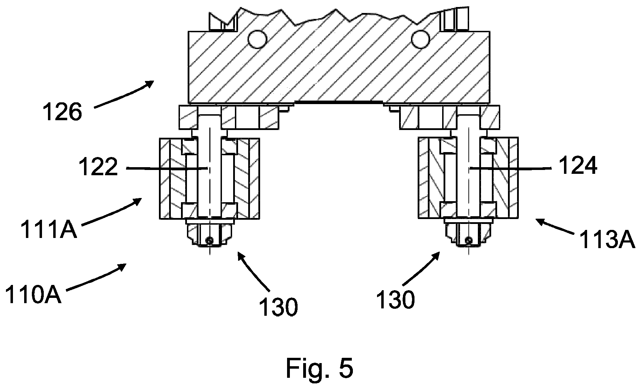

Wie in den Figuren dargestellt, kann die Greifvorrichtung 104 ein erstes Paar von Greifrollen 110A und mindestens ein zweites Paar von Greifrollen 110B aufweisen, die jeweils dazu eingerichtet sind, das Holzwerkstück 102 zwischen den Greifrollen 110A, 110B des jeweiligen Paares zu klemmen. Das erste Paar von Greifrollen 110A und das zweite Paar von Greifrollen 110B können entlang einer Längsachse des Holzwerkstücks 102 voneinander beabstandet angeordnet sein, wenn das Holzwerkstück 102 zwischen den Greifrollen 110A, 110B geklemmt ist. Jedes Paar von Greifrollen 110A, 110B kann zwei Rollen aufweisen, die an gegenüberliegenden Seiten des Holzwerkstücks 102 angeordnet sind, wenn das Holzwerkstück 102 zwischen den Greifrollen 110A, 110B geklemmt ist. Fig. 3 und 5 zeigen beispielhaft die Rollen 111A, 113A des Paares von Greifrollen 110A.

Die Greifvorrichtung 104 kann außerdem mindestens zwei Klemmbacken 114 aufweisen, zwischen denen das Holzwerkstück 102 klemmbar ist, um das Holzwerkstück 102 relativ zur Befestigungsvorrichtung 106 zu fixieren. Wie in den Figuren dargestellt, kann die Greifvorrichtung 104 ein erstes Paar von Klemmbacken 114A und mindestens ein zweites Paar von Klemmbacken 114B aufweisen, die jeweils dazu eingerichtet sind, das Holzwerkstück 102 zwischen den Klemmbacken 114A, 114B zu klemmen und zu fixieren. Das erste Paar von Klemmbacken 114A und das zweite Paar von Klemmbacken 114B können entlang einer Längsachse des Holzwerkstücks 102 voneinander beabstandet angeordnet sein, wenn das Holzwerkstück 102 zwischen den Klemmbacken 114A, 114B geklemmt ist. Jedes Paar von Klemmbacken 114A, 114B kann zwei Klemmbacken aufweisen, die an gegenüberliegenden Seiten des Holzwerkstücks 102 angeordnet sind, wenn das Holzwerkstück 102 zwischen den Klemmbacken 114A, 114B geklemmt ist. Fig. 4 zeigt beispielhaft die Klemmbacken 115A, 117A des Paares von Klemmbacken 114A.

Die Greifrollen 110 und/oder die Klemmbacken 114 können beweglich bzw. verfahrbar sein, vorzugsweise jeweils zueinander und voneinander. Vorzugsweise sind die Klemmbacken 114 dazu eingerichtet, ein Bewegen des Holzwerkstücks 102, insbesondere entlang der Längsachse des Holzwerkstücks 102, im Wesentlichen zu verhindern, wenn das Holzwerkstück 102 zwischen den Klemmbacken 114 geklemmt ist, wohingegen die Greifrollen 110 dazu eingerichtet sein können, ein Bewegen des Holzwerkstücks 102, insbesondere entlang der Längsachse des Holzwerkstücks, zuzulassen, wenn das Holzwerkstück 102 zwischen den Greifrollen 110 geklemmt ist.

Die Klemmbacken 114 können in eine Klemmposition gebracht werden, in der die Befestigungsvorrichtung 106 zumindest einen Abschnitt des Holzwerkstücks 102 an der Struktur befestigen kann, beispielsweise mittels mindestens einer Klammer und/oder mindestens eines Nagels. Anschließend können die Klemmbacken 114 in eine Offenposition gebracht werden. Anschließend kann das Holzwerkstück 102 relativ zu den Klemmbacken 114 und zur Befestigungsvorrichtung 106 bewegt werden, beispielsweise mittels eines Antriebs und/oder Roboters, beispielsweise bis ein zweiter Abschnitt des Holzwerkstücks 102 an der Befestigungsvorrichtung 106 angeordnet ist, so dass die Befestigungsvorrichtung 106 den zweiten Abschnitt des Holzwerkstücks 102 an der Struktur befestigen kann. Anschließend können die Klemmbacken 114 erneut in die Klemmposition gebracht werden, um das Holzwerkstück 102 zwischen den Klemmbacken 114 zu klemmen. Anschließend kann die Befestigungsvorrichtung 106 den zweiten Abschnitt des Holzwerkstücks 102 an der Struktur befestigen, beispielsweise mittels mindestens einer weiteren Klammer und/oder mindestens eines weiteren Nagels. Das Holzwerkstück 102 kann durchgehend zwischen den Greifrollen 110 geklemmt sein. Demnach müssen die Greifrollen 110 auf Grund der Möglichkeit des Abrollens des Holzwerkstücks 102 an den Greifrollen 110 nicht geöffnet werden, um ein Bewegen des Holzwerkstücks 102, insbesondere relativ zur Befestigungsvorrichtung 106, zuzulassen.

Die Handhabungsvorrichtung 100 kann zusätzlich mindestens ein Andrückelement 118 aufweisen, das dazu eingerichtet ist, mit dem Holzwerkstück 102 in Kontakt zu treten, und vorzugsweise auf das Holzwerkstück 102 eine Kraft, vorzugsweise eine Druckkraft, auszuüben. Dadurch kann ein Abstand des Holzwerkstücks 102 von der Befestigungseinrichtung 106 vorgegeben bzw. definiert werden. Außerdem kann dadurch die Genauigkeit und/oder Qualität der Befestigung des Holwerkstücks 102 an der Struktur erhöht werden. Vorzugsweise wirkt die Kraft, welche das Andrückelement 118 auf das Holzwerkstück 102 ausüben kann, in einer Richtung, die im Wesentlichen senkrecht zur Greifkraft bzw. Klemmkraft erstreckt, welche die Greifvorrichtung 104 bzw. die Greifrollen 110 und/oder die Klemmbacken 114 auf das Holzwerkstück 114 ausüben. Vorzugsweise ist das Andrückelement 118 dazu eingerichtet, das Holzwerkstück 102 gegen die Struktur anzudrücken.

Die Handhabungsvorrichtung 100 kann eine Mehrzahl von Andrückelementen 118 aufweisen, wie in den Figuren dargestellt. Die Andrückelemente 118 sind vorzugsweise in einer Richtung entlang der Längsachse des Holzwerkstücks 102 voneinander beabstandet, wenn das Holzwerkstück 102 durch die Greifvorrichtung 104 gegriffen wird.

Das Andrückelement 118 kann als Andrückrolle ausgebildet sein, die dazu eingerichtet sein kann, eine Bewegung des Holzwerkstücks 102 relativ zur Befestigungsvorrichtung 106, vorzugsweise entlang einer Längsachse des Holzwerkstücks 102, durch Drehen der Andrückrolle 118 zuzulassen und/oder zu bewirken, in einem Zustand, in dem die Andrückrolle 118 das Holzwerkstück 102 an einer Oberfläche des Holzwerkstücks 102 anliegt. Demnach kann das Holzwerkstück 102 in einem Zustand bewegt werden, in dem die Andrückrolle 118 mit dem Holzwerkstück 102 in Kontakt steht, und vorzugsweise gegen das Holzwerkstück 102 eine (Druck)Kraft ausübt, vorzugsweise durchgehend.

Die Komponenten der Handhabungsvorrichtung 100, insbesondere die hierin bzw. oben beschriebenen Komponenten, können an einer gemeinsamen Trägereinheit 109 montiert sein. Dadurch kann die Handhabungsvorrichtung 100 als eine zusammenhängende Einheit verfahrbar sein.

Fig. 4 zeigt, in einer vergrößerten Ansicht, das Paar von Klemmbacken 114A der Handhabungsvorrichtung 100 aus Fig. 1 bis 3. Das Paar von Klemmbacken 114A weist die Klemmbacken 115A und 117A auf. Vorzugsweise sind die Klemmbacken 115A und 117A beweglich bzw. verfahrbar sein, vorzugsweise jeweils zueinander und voneinander, wie bereits oben erläutert. In Fig. 4 ist mit gestrichelten Linien die Offenposition der Klemmbacken 115A und 117A gezeigt, in der das Holzwerkstück 102 zwischen den Klemmbacken 115A und 117A beweglich ist. Die Klemmposition der Klemmbacken 115A und 117A, in der das Holzwerkstück 102 zwischen den Klemmbacken 115A und 117A geklemmt und deshalb im Wesentlich unbeweglich ist, ist mit durchgezogenen Linien in Fig. 4 dargestellt. Die Klemmbacken 115A und 117A können beispielsweise mittels eines Antriebs, beispielsweise eines elektrischen Antriebs und/oder hydraulischen Antriebs und/oder pneumatischen Antriebs, zwischen der Offenposition und der Klemmposition bewegt bzw. verfahren werden.

Die Klemmbacken 115A und 117A können mit einer Basiseinheit 125 bewegbar, vorzugsweise translatorisch bewegbar und/oder drehbar, befestigt sein.

Fig. 5 zeigt, in einer vergrößerten Querschnittsansicht, das Paar von Greifrollen 110A. Das Paar von Greifrollen 110A weist die Greifrollen 111A und 113A auf, die jeweils über eine Achse 122, 124 mit einer Basiseinheit 126 drehbar verbunden sein können, um ein Drehen der Greifrollen 111A und 113A zu ermöglichen. Die Greifrollen 111A und 113A können über ein Montageelement 130, beispielsweise eine Mutter, mit der jeweiligen Achse 122, 124 verbunden sein.

Das Paar von Greifrollen 110B kann ähnlich oder identisch aufgebaut sein wie das in Fig. 5 gezeigte Paar von Greifrollen 110A.

Die Handhabungsvorrichtung 100 kann auch mehr als zwei Paare von Greifrollen und/oder mehr als zwei Paare von Klemmbacken und/oder mehr als zwei Andrückelemente bzw. Andrückrollen aufweisen.

## Patentansprüche

1. Eine Handhabungsvorrichtung (100) zum Handhaben mindestens eines Holzwerkstücks (102), vorzugsweise mindestens eines Holzbalkens, wobei die Handhabungsvorrichtung (100) aufweist:
mindestens eine Greifvorrichtung (104) zum Greifen des Holzwerkstücks (102); und
mindestens eine Befestigungsvorrichtung (106), die dazu eingerichtet ist, das Holzwerkstück (102) zumindest teilweise an einer Struktur zu befestigen;
wobei die Handhabungsvorrichtung (100) dazu eingerichtet ist, das Holzwerkstück (102) zumindest teilweise gleichzeitig mittels der Greifvorrichtung (104) zu greifen und mittels der Befestigungsvorrichtung (106) an der Struktur zu befestigen;
**dadurch gekennzeichnet, dass** die Handhabungsvorrichtung (100) dazu eingerichtet ist, einen ersten Abschnitt des Holzwerkstücks (102) mittels der Befestigungsvorrichtung (106) mit der Struktur zu befestigen, die Befestigungsvorrichtung (106) anschließend entlang des Holzwerkstücks (102) durch Gleiten und/oder Rollen der Greifvorrichtung (104) an dem Holzwerkstück (102) zu einem zweiten Abschnitt des Holzwerkstücks (102) zu bewegen und den zweiten Abschnitt des Holzwerkstücks (102) mittels der Befestigungsvorrichtung (106) mit der Struktur zu befestigen.

2. Die Handhabungsvorrichtung (100) nach einem der vorhergehenden Ansprüche, wobei die Greifvorrichtung (104) mindestens zwei Greifrollen (110) aufweist, zwischen denen das Holzwerkstück (102) klemmbar ist.

3. Die Handhabungsvorrichtung (100) nach Anspruch 2, wobei die Greifrollen (110) dazu eingerichtet sind, eine Bewegung des Holzwerkstücks (102) relativ zur Befestigungsvorrichtung (106), vorzugsweise entlang einer Längsachse des Holzwerkstücks (102), durch Drehen der Greifrollen (110) zuzulassen und/oder zu bewirken, in einem Zustand, in dem das Holzwerkstück (102) zwischen den Greifrollen geklemmt ist.

4. Die Handhabungsvorrichtung (100) nach Anspruch 2 oder 3, wobei die Greifvorrichtung (104) ein erstes Paar von Greifrollen (110A) und mindestens ein zweites Paar von Greifrollen (110B) aufweist, die jeweils dazu eingerichtet sind, das Holzwerkstück (102) zwischen den Greifrollen (110A, 110B) zu klemmen, wobei das erste Paar von Greifrollen (110A) und das zweite Paar von Greifrollen (110B) entlang einer Längsachse des Holzwerkstücks (102) voneinander beabstandet angeordnet sind, wenn das Holzwerkstück (102) zwischen den Greifrollen (110A, 110B) geklemmt ist.

5. Die Handhabungsvorrichtung (100) nach einem der vorhergehenden Ansprüche, wobei die Greifvorrichtung (104) mindestens zwei Klemmbacken (114) aufweist, zwischen denen das Holzwerkstück (102) klemmbar ist, um das Holzwerkstück (102) relativ zur Befestigungsvorrichtung (106) zu fixieren.

6. Die Handhabungsvorrichtung (100) nach einem der vorhergehenden Ansprüche, zusätzlich aufweisend mindestens ein Andrückelement (118), das dazu eingerichtet ist, mit dem Holzwerkstück (102) in Kontakt zu treten und das Holzwerkstück (102) gegen die Struktur anzudrücken, wobei das Andrückelement (118) als Andrückrolle ausgebildet ist, die dazu eingerichtet ist, eine Bewegung des Holzwerkstücks (102) relativ zur Befestigungsvorrichtung (106), vorzugsweise entlang einer Längsachse des Holzwerkstücks (102), durch Drehen der Andrückrolle (118) zuzulassen und/oder zu bewirken, in einem Zustand, in dem die Andrückrolle (118) an einer Oberfläche des Holzwerkstücks (102) anliegt und vorzugsweise das Holzwerkstück (102) gegen die Struktur andrückt.

7. Die Handhabungsvorrichtung (100) nach einem der vorhergehenden Ansprüche, wobei die Handhabungsvorrichtung (100) verfahrbar ist, vorzugsweise als eine zusammenhängende Einheit.

8. Ein Verfahren zum Handhaben mindestens eines Holzwerkstücks (102), vorzugsweise mindestens eines Holzbalkens, vorzugsweise mittels einer Handhabungsvorrichtung (100) nach einem der Ansprüche 1 bis 7, wobei das Verfahren aufweist:
(a) Greifen des Holzwerkstücks (102) mittels mindestens einer Greifvorrichtung (104);
(b) Einstellen, mittels der Greifvorrichtung (104), einer Position und/oder einer Orientierung des Holzwerkstücks (102), relativ zu einer Befestigungsvorrichtung (106); und
(c) Befestigen des Holzwerkstücks (102) an einer Struktur mittels der Befestigungsvorrichtung (106), während die Greifvorrichtung (104) gleichzeitig das Holzwerkstück (102) greift,
**dadurch gekennzeichnet, dass** die Befestigungsvorrichtung (106) einen ersten Abschnitt des Holzwerkstücks (102) an der Struktur befestigt, wobei die Befestigungsvorrichtung (106) anschließend entlang des Holzwerkstücks (102) zu einem zweiten Abschnitt des Holzwerkstücks (102) durch Gleiten und/oder Rollen der Greifvorrichtung (104) an dem Holzwerkstück (102) bewegt wird, wobei die Befestigungsvorrichtung (106) den zweiten Abschnitt des Holzwerkstücks (102) an der Struktur befestigt.

## Claims

1. A handling device (100) for handling at least one wooden workpiece (102), preferably at least one wooden beam, wherein the handling device (100) comprises:
at least one gripping device (104) for gripping the wooden workpiece (102); and
at least one fastening device (106) configured to fasten the wooden workpiece (102) at least partially to a structure;
wherein the handling device (100) is configured to grip the wooden workpiece (102) by means of the gripping device (104) and fasten it to the structure by means of the fastening device (106) at least partially simultaneously;
**characterized in that** the handling device (100) is configured to fasten a first section of the wooden workpiece (102) to the structure by means of the fastening device (106), subsequently move the fastening device (106) along the wooden workpiece (102) by sliding and/or rolling the gripping device (104) along the wood workpiece (102) to a second section of the wooden workpiece (102), and secure the second section of the wooden workpiece (102) to the structure by means of the fastening device (106).

2. The handling device (100) according to one of the preceding claims, wherein the gripping device (104) comprises at least two gripping rollers (110) between which the wooden workpiece (102) is clampable.

3. The handling device (100) according to claim 2, wherein the gripping rollers (110) are configured to allow and/or cause movement of the wooden workpiece (102) relative to the fastening device (106), preferably along a longitudinal axis of the wooden workpiece (102), by rotating the gripping rollers (110) in a state in which the wooden workpiece (102) is clamped between the gripping rollers.

4. The handling device (100) according to claim 2 or 3, wherein the gripping device (104) comprises a first pair of gripping rollers (110A) and at least one second pair of gripping rollers (110B), each of which being configured to clamp the wooden workpiece (102) between the gripping rollers (110A, 110B), wherein the first pair of gripping rollers (110A) and the second pair of gripping rollers (110B) are arranged spaced apart from one another along a longitudinal axis of the wooden workpiece (102) when the wooden workpiece (102) is clamped between the gripping rollers (110A, 110B).

5. The handling device (100) according to any one of the preceding claims, wherein the gripping device (104) comprises at least two clamping jaws (114) between which the wooden workpiece (102) is clampable to fix the wooden workpiece (102) relative to the fastening device (106).

6. The handling device (100) according to any one of the preceding claims, further comprising at least one pressing element (118) configured to come into contact with the wooden workpiece (102) and to press the wooden workpiece (102) against the structure, wherein the pressing element (118) is configured as a pressure roller configured to allow and/or cause movement of the wooden workpiece (102) relative to the fastening device (106), preferably along a longitudinal axis of the wooden workpiece (102), by rotating the pressure roller (118) in a state in which the pressure roller (118) abuts a surface of the wooden workpiece (102) and preferably presses the wooden workpiece (102) against the structure.

7. The handling device (100) according to any one of the preceding claims, wherein the handling device (100) is movable, preferably as a single unit.

8. A method for handling at least one wooden workpiece (102), preferably at least one wooden beam, preferably using a handling device (100) according to any one of claims 1 to 7, wherein the method comprises:
(a) gripping the wooden workpiece (102) by means of at least one gripping device (104);
(b) adjusting, by means of the gripping device (104), a position and/or orientation of the wooden workpiece (102) relative to a fastening device (106); and
(c) fastening the wooden workpiece (102) to a structure using the fastening device (106) while the gripping device (104) simultaneously grips the wooden workpiece (102),
**characterized in that** the fastening device (106) fastens a first portion of the wooden workpiece (102) to the structure, wherein the fastening device (106) is subsequently moved along the wooden workpiece (102) to a second portion of the wooden workpiece (102) by sliding and/or rolling the gripping device (104) along the wooden workpiece (102), wherein the fastening device (106) fastens the second section of the wooden workpiece (102) to the structure.

## Revendications

1. Dispositif de manutention (100) permettant de manipuler au moins une pièce en bois (102), de préférence au moins une poutre en bois, ledit dispositif de manutention (100) comprenant :
au moins un dispositif de préhension (104) pour saisir la pièce en bois (102) ; et
au moins un dispositif de fixation (106) prévu pour fixer au moins partiellement la pièce en bois (102) à une structure ;
où le dispositif de manutention (100) est prévu pour saisir au moins partiellement la pièce en bois (102) au moyen du dispositif de préhension (104) et pour la fixer simultanément à la structure au moyen du dispositif de fixation (106) ;
**caractérisé en ce que** le dispositif de manutention (100) est prévu pour fixer une première partie de la pièce en bois (102) à la structure au moyen du dispositif de fixation (106), puis pour déplacer le dispositif de fixation (106) le long de la pièce en bois (102) par glissement et/ou roulement du dispositif de préhension (104) sur la pièce en bois (102) jusqu'à une deuxième partie de la pièce en bois (102), et fixer la deuxième partie de la pièce en bois (102) à la structure au moyen du dispositif de fixation (106).

2. Dispositif de manutention (100) selon la revendication 1selon l'une des revendications précédentes, où le dispositif de préhension (104) comporte au moins deux rouleaux de préhension (110) entre lesquels la pièce en bois (102) peut être serrée.

3. Dispositif de manutention (100) selon la revendication 2, où les rouleaux de préhension (110) sont prévus pour permettre et/ou provoquer un déplacement de la pièce en bois (102) par rapport au dispositif de fixation (106), de préférence le long d'un axe longitudinal de la pièce en bois (102), par rotation des rouleaux de préhension (110), dans un état où la pièce en bois (102) est serrée entre les rouleaux de préhension.

4. Dispositif de manutention (100) selon la revendication 2 ou la revendication 3, où le dispositif de préhension (104) comprend une première paire de rouleaux de préhension (110A) et au moins une deuxième paire de rouleaux de préhension (110B), prévues chacune pour serrer la pièce en bois (102) entre les rouleaux de préhension (110A, 110B), la première paire de rouleaux de préhension (110A) et la deuxième paire de rouleaux de préhension (110B) étant disposées à espacement l'une de l'autre le long d'un axe longitudinal de la pièce en bois (102) lorsque la pièce en bois (102) est serrée entre les rouleaux de préhension (110A, 110B).

5. Dispositif de manutention (100) selon l'une des revendications précédentes, où le dispositif de préhension (104) comporte au moins deux mâchoires de serrage (114) entre lesquelles la pièce en bois (102) peut être serrée afin de fixer la pièce en bois (102) par rapport au dispositif de fixation (106).

6. Dispositif de manutention (100) selon l'une des revendications précédentes, comportant en outre au moins un élément de pression (118) prévu pour venir en contact avec la pièce en bois (102) et pour presser la pièce en bois (102) contre la structure, ledit élément de pression (118) étant conçu comme rouleau de pression prévu pour permettre et/ou provoquer un déplacement de la pièce en bois (102) par rapport au dispositif de fixation (106), de préférence le long d'un axe longitudinal de la pièce en bois (102), par rotation du rouleau de pression (118), dans un état où le rouleau de pression (118) est en appui contre une surface de la pièce en bois (102) et, de préférence, serre la pièce en bois (102) contre la structure.

7. Dispositif de manutention (100) selon l'une des revendications précédentes, où ledit dispositif de manutention (100) est déplaçable, de préférence en tant qu'unité formée d'un seul tenant.

8. Procédé de manutention d'au moins une pièce en bois (102), de préférence d'au moins une poutre en bois, de préférence au moyen d'un dispositif de manutention (100) selon l'une des revendications 1 à 7, ledit procédé comprenant :
(a) la préhension de la pièce en bois (102) au moyen d'au moins un dispositif de préhension (104) ;
(b) le réglage, au moyen du dispositif de préhension (104), d'une position et/ou d'une orientation de la pièce en bois (102) par rapport à un dispositif de fixation (106) ; et
(c) la fixation de la pièce en bois (102) à une structure au moyen du dispositif de fixation (106), le dispositif de préhension (104) saisissant simultanément la pièce en bois (102),
**caractérisé en ce que** le dispositif de fixation (106) fixe une première partie de la pièce en bois (102) à la structure, le dispositif de fixation (106) se déplaçant ensuite le long de la pièce en bois (102) vers une deuxième partie de la pièce en bois (102) par glissement et/ou roulement du dispositif de préhension (104) sur la pièce en bois (102), le dispositif de fixation (106) fixant la deuxième partie de la pièce en bois (102) à la structure.
